# EUROPEAN PATENT APPLICATION

(11) **EP 4 660 819 A1**
(43) Date of publication of application: **10.12.2025**
(21) Application number: 25166264.9
(22) Date of filing: 26.03.2025
(51) Int. Cl.: G06F 16/11, G06F 16/16

(54) **COMPLIANT DATA MANAGEMENT FOR CUSTOM OBJECTS**

(30) Priority: 06.06.2024 US 202418735479
(71) Applicant: SAP SE, 69190 Walldorf (DE)
(72) Inventor: G, Gayatri, 69190 Walldorf (DE); NAWAZ, Syed Roshan, 69190 Walldorf (DE); SEENIVASAGAM, Karthikeyan, 69190 Walldorf (DE); SAINI, Anmol Kaur, 69190 Walldorf (DE); SAXENA, Nabhish, 69190 Walldorf (DE); M P, Revathi, 69190 Walldorf (DE)
(74) Representative: Müller-Boré & Partner Patentanwälte PartG mbB

(57) **Abstract**

In some embodiments, there is provided a computer-implemented method for data destruction management including creating a data destruction object linked to a custom object; creating an information lifecycle management object linked to the data destruction object; grouping the information lifecycle management object into an audit area comprising information lifecycle management objects having a similar context, wherein a data retention policy is created, while in the audit area, for the information lifecycle management object; scheduling a data destruction batch job selecting a data destruction object for destruction which is mapped to information lifecycle management object; and destroying, based on the scheduling, one or more data of the customized object; and verifying the destroy based on a check of a destruction logRelated systems, methods, and articles of manufacture are also disclosed.

## Description

### TECHNICAL FIELD

This disclosure relates to data destruction management.

### BACKGROUND

In today's world, many companies rely on software applications to conduct operations. Software applications deal with various aspects of companies' businesses, which can include finances, product development, human resources, customer service, travel management, and many other aspects. Software applications typically operate from servers (which can be on-premises and/or on a cloud platform). Many computing systems require frequent changes to augment existing functionality.

### SUMMARY

In some embodiments, there is provided a computer-implemented method for data destruction management including creating a data destruction object linked to a custom object; creating an information lifecycle management object linked to the data destruction object; grouping the information lifecycle management object into an audit area comprising information lifecycle management objects having a similar context, wherein a data retention policy is created, while in the audit area, for the information lifecycle management object; scheduling a data destruction batch job selecting a data destruction object for destruction which is mapped to information lifecycle management object; and destroying, based on the scheduling, one or more data of the customized object; and verifying the destroy based on a check of a destruction log.

In some implementations, the current subject matter may include one or more of the following optional features. The data destruction object is linked to the custom object using a first user interface. An application using the custom object is deployed in a container to a destination cloud platform. The container further includes the data destruction object and the information lifecycle management object. The information lifecycle management object is linked to the data destruction object using a second user interface. There is a 1-1 mapping between the information lifecycle management object and the data destruction object. The information lifecycle management object is grouped into the audit area using a third user interface. The similar context comprises a financial audit area, a tax audit area, or a human resource audit. The data retention policy is created, while in the audit area, for the information lifecycle management object using a fourth user interface. The data retention policy specifies at least a time when the destroying can occur.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including but not limited to a connection over a network (e.g., the Internet, a wireless wide area network, a local area network, a wide area network, a wired network, or the like), via a direct connection between one or more of the multiple computing system s, etc.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1A illustrates an example of a timeline for data destruction processing, in accordance with some embodiments;
FIG. 1B depicts an example of an object, in accordance with some embodiments;
FIG. 1C depicts an example of persisted data for an object, in accordance with some embodiments;
FIG. 1D depicts an example of a data destruction object, in accordance with some embodiments;
FIG. 1E depicts an example of an information life cycle object, in accordance with some embodiments;
FIG. 1F depicts the relationship among objects 100A, 100B, and 100C, in accordance with some embodiments.
FIG. 2 depicts an example of a system for data destruction, in accordance with some embodiments;
FIG. 3A depicts an example of a process for data destruction, in accordance with some embodiments;
FIG. 3B depicts an example audit user interface, in accordance with some embodiments;
FIG. 4 illustrates an example of a processor-based system, in accordance with some embodiments; and
FIG. 5 depicts another example of a system, in accordance with some example implementations of the current subject matter.

### DETAILED DESCRIPTION

The digitalization of the enterprise is causing tremendous growth in the quantity of enterprise systems being used as well as the volume of documents being handled and stored digitally in document management and other types of systems. With this increase, there is a corresponding increase in physical resources, such as memory, storage, processing power, and/or the like, required to handle the increased in digitalization. And this increased resource usage leads to higher carbon footprints. Moreover, the requirements can vary among different industries, regions, and countries.

In addition to increased resources, an enterprise is often required to comply with data retention and/or privacy requirements across different countries, industries, and/or the like. For example, an enterprise's tax document may need to be stored for 7 years in country A, but stored for only 5 years in country B. Similarly, personnel data related to an employee may be sensitive and may have requirements for privacy protection and deletion once an employee leaves a company. In other words, these sensitive data may need to comply with data protection rules according to regional or country requirements, and the timelines and associated rules for destroying the sensitive data may also vary according to regional or country requirements. As such, the enterprise's desire to delete documents to reduce resource usage may need to comply with the varying rules according to data type (e.g., tax, personnel data, health data, etc.), region (e.g., EU), and/or country. For example, data destruction by an enterprise may need to comply with the European Union's General Data Protection Regulation (GDPR) as well as other requirements, such as "right to erasure" (e.g., "right to be forgotten"), etc.

In a cloud framework, a developer may develop a "core" application, such as a human resources management (HRM) application, a tax management (TM) application, a financial management (FM) application and/or the like. When deployed to the cloud platform (e.g., via a container) for a given end-user, the "core" application may be extended by a developer, so the core application is customized to the end-user's specific needs. As such, the enterprise's end-user (who has extended or customized an application) may have a need to manage data destruction in a way such that any extensions developed (which may access or otherwise include certain destructible data) also complies with the above noted data destruction and retention rules while minimizing resource usage.

In some embodiments, a system, such as an information lifecycle management (ILM) system, may manage a lifecycle of data of one or more enterprise applications from, for example, the creation of the data (e.g., when created at a database) to the data's destruction (e.g., deletion or destruction at a database or a store). Moreover, the ILM system may manage the lifecycle of data in a system, such as a database (e.g., a cloud-based enterprise resource planning (ERP) system such as SAP's S/4HANA cloud) or other type of persistence. The lifecycle data management of the data object may include so-called "standard" objects deployed with the cloud-based ERP system but also "custom" objects, such as an extension to a standard object that customize the standard object for a given enterprise. In this way, the custom object (which may access or include "destructible data") are destroyed in a rule or a policy compliant manner. As used herein "destructible data" refers to data that is allowed to be destroyed based on one or more data destruction rules (e.g., policies). These data destruction rules may be in accordance with rules, policy, and/or laws in a jurisdiction (e.g., laws related to privacy, healthcare, personal data, retention of financial or legal records, etc.).

In some embodiments, a data destruction object may be created to facilitate design time configuration and runtime activities of data destruction. The term object (which may also be referred to as a business object) refers to data and/or logic (e.g., a structure, a behavior, and a corresponding runtime implementation). And the object may be used to represent a real-world artifact such as a purchase order, a sales order, a personal record, a pay record, etc. From a developer perspective, the object can hide (so the developer does not need to know) some of the technical details of the object.

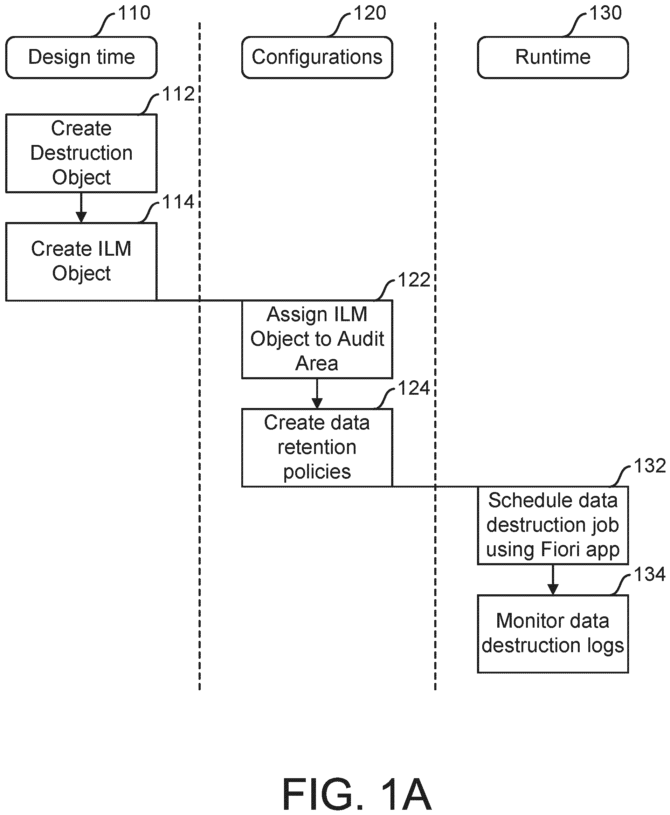

FIG. 1A depicts an example timeline for data destruction, in accordance with some embodiments.

At design time 110, a user, such as a developer, may create, at 112, a data destruction object. The data destruction object may be represented as a table including the type of data associated with an application or a process (e.g., human resources data, financial data, tax data, etc.), where the data is used (e.g., in what location(s) in a database is the data persisted, the identity of an object containing the data, etc.), dates associated with the data (e.g., creation date), logic (e.g., conditions and/or rules) associated with destruction of the data, and/or the like.

For example, if the data is related to human resources (e.g., employee data), the data destruction object may include where the data is used in an application (e.g., in which database and/or table is the data persisted), when the data was created, the region and/or country associated with the data (e.g., which country the employee resides), and other details related to the data. The data destruction object may include logic regarding whether the data is destructible or under what circumstances the data is destructible. For example, the logic may include policies or rules defining when data can be deleted.

Moreover, during design time 110, a user, such as a developer, may create, at 114, an information lifecycle management (ILM) object. The ILM object may include settings (which may be configured by for example an end-user) related to lifecycle management. For example, the ILM object may include a specific retention period for the employee data or a specific retention period for tax data. This retention period may be configured with a time (e.g., time of day, date, month, and/or year). Moreover, the retention period may be associated with other values, such as a date from which the retention period should be measured. For example, the retention period may be set to 90 days after the employee's last day of employment. In the case of tax data, the retention period may indicate destroy after 7 years from creation date of the tax data object or from the end of the corresponding tax year. The ILM object may be linked to a data destruction object (e.g., as a 1-1 mapping). In this way, the ILM object can be accessed to configure the settings affecting the data destruction object, such as by configuring the retention period.

To summarize, during design time 110, the data destruction object and the ILM object are created, but some of the configuration of these objects may be premature as the deployment and customization of these objects may dictate their final configurations for an end-user. For example, the privacy laws, tax laws, etc. of different countries may differ, so the configuration may need to wait until deployment of for example the HRM application, financial resource management (FRM) application, and/or the like, so the end user's specific rules/policy can be applied.

At the configuration phase 120, a user may assign, at 122, the ILM object (which was created at 114) to an audit area. For example, groups of ILM objects (which as noted are linked to destruction objects) may be grouped and assigned to an audit area, such that ILM objects having a similar context are grouped together. For example, an audit area may comprise one of the following contexts: a financial audit area, a tax audit area, a human resource audit area, and/or other the like. In other words, ILM objects may be grouped into a tax audit area as the ILM objects may share some of the same context, such as settings for data destruction and policies. To illustrate further, an ILM object related to employee data may be grouped in a human resources audit area, while an ILM object related revenue may be grouped in a tax audit area. The grouping into audit area can facilitate the creation of retention policies for each area as each audit area may, as noted, have the same or similar policies for data destruction. For example, the human resources audit area may include the ILM objects related to human resources data. In this example, the retention policy may be created at 124 to specify after an employee is terminated destroy the employee's personal data immediately. Alternatively, the retention policy may be waiting 90 days after the employee is terminated before the data destruction of the former employee's data.

In some embodiments, the policies created at 124 may be created or developed (e.g., from "scratch"). with the assistance of an end user such as a data privacy specialist. Alternatively, or additionally, the policies may be selected from a group of policies, and then modified for a specific use case. To illustrate by an example, the created policy may be a modified versions of a another policy, wherein the modification defines for example a time period for the retention period (e.g., how many days, months, and/or years to retain), the field(s) in the data (e.g., termination date, final paycheck date, etc.) from which to measure the retention period, and/or other aspects of the retention policy.

During the runtime phase 130, an application may be deployed to a cloud platform, so it can be accessed by an end-user (e.g., accessed as for example a SaaS). As part of the deployment, the data destruction object and ILM object are deployed as part of the application. For example, a container may include the application as well as the data destruction object and the ILM object. In the example of an HRM application, an end-user may schedule, at 132, a data destruction job to destroy one or more data objects associated with the HRM application (e.g., employee related data "object" stored in a database at a cloud platform). To that end, the end-user may want to schedule for deletion of the data, which is associated with a data destruction object and the ILM object. When this is the case, the ILM policies and rules provide the settings indicating whether the data is eligible for destruction, such as whether a retention period defined by the settings of the ILM object indicates the data associated with a data object can be deleted. If so, the data can be deleted, while the data destruction object provides details identify where the data (which are being destroyed) are persisted, for example. After the destruction of the data takes place, a destruction log may be monitored at 134 to confirm the destruction of the data.

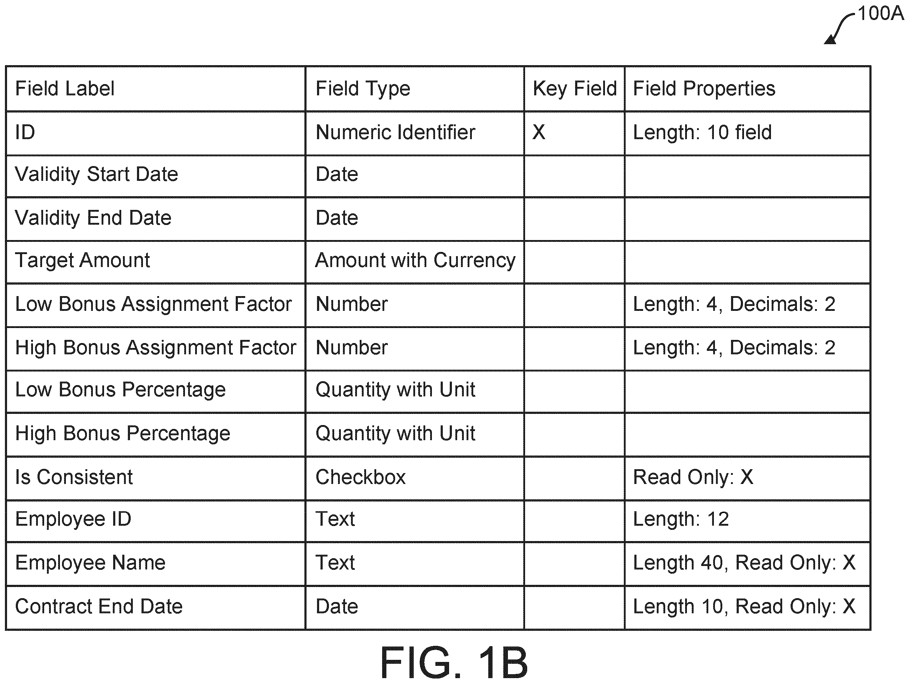

FIG. 1B depicts an example of an object 100A (also referred to herein as a data object or business object). In the example of FIG. 1B, the object is created as a custom or extended object to support an employee "bonus plan" for an HRM application associated with one or more employees. This bonus plan object includes an ID (which uniquely identifies the object). The ID is a key field (as noted by the X) so the object 100A can be linked to other objects via the key field, such as the ID. The object 100A also includes a validity start date, a validity end date, a target amount for the bonus, and rules (e.g., logic) that define the bonus structure, such as a low bonus assignment factor, a high bonus assignment factor, a low bonus percentage, and a high bonus percentage. The object 100A also includes "Is Consistent" (which refers to a performance rating), and employee information, such as an employee ID and employee name. The object 100A also includes a contract end date that indicates when an employee terminates employment.

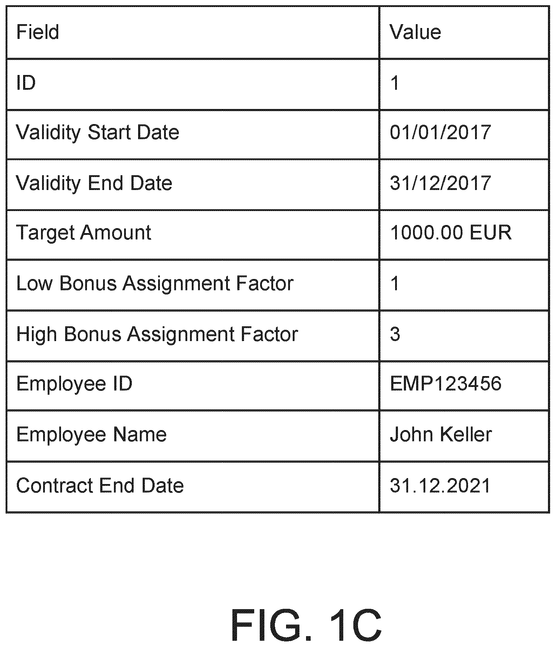

In the FIG. 1B example, when a salesperson makes a sale, the employee ID of the salesperson is used as the employee ID of a sales order object, and the employee ID may also link to an employee master data object (which contains employee data for the employee identified by the employee ID). FIG. 1C depicts how some of the "bonus plan" object 100A of FIG. 1B is persisted at for example a database management system. Some (or all) of the data (e.g., 1, 01/01/2017, ... EMP 123456, John Keller, 21.12.2021) at FIG. 1C (which may a part of or linked to an employee's master data) may be destructible data after, for example, the employee is terminated or some other type of event.

In the example of FIG. 1B, the bonus plan object 110A's data may be stored and retained by the employer or organization so long as the employee master data for that employee is still valid or alive. In other words, if the employee is no longer part of the enterprise (e.g., quits or leaves), the employee master data for that employee should be destroyed including the data depicted at FIG. 1C. But the destruction of the employee master data may be in accordance with a retention period that dictates how long after an employee is terminated that the former employee's data can be retained and/or deleted. This retention period may vary across different jurisdictions (e.g., countries, regions, such as EU, etc.). And in this example, this retention period dictates when the former employee's bonus plan object 100A data (e.g., data 1, 01/01/2017, ... EMP 123456, John Keller, 21.12.2021 of FIG. 1C) should be destroyed.

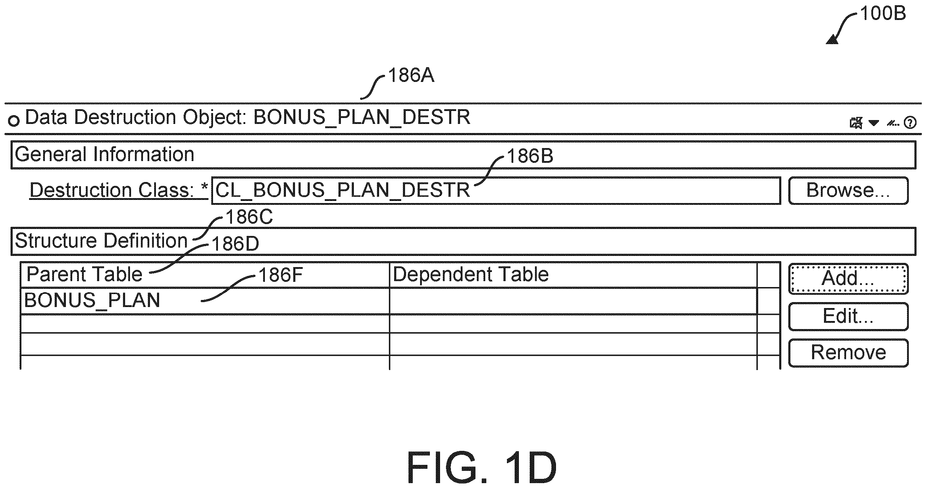

During the design time 110, a user, such as a developer, may implement the logic for the destructibility of the bonus plan object 100A noted above with respect to FIG. 1B. Using for example the employee ID (which is linked to employee master data), the logic may determine what data can be destroyed. Supposing, John Keller (with employee ID EMP123456) is terminated, the logic would link (via the employee ID) to the destructible data, which in this example is the employee master data of FIG. 1C for John Keller. At 112 when the data destruction object is created for the bonus plan object (BONUS_PLAN_DESTR), the BONUS_PLAN_DESTR object considers for the destruction of the data of FIG. 1C. Moreover, the logic for the destruction is either included or mapped to (e.g., linked to) the destruction object, which in this example is BONUS_PLAN_DESTR object, an example of which is depicted at FIG. 1D.

FIG. 1D depicts an example of a definition of a data destruction object 100B, in accordance with some embodiments. The data destruction object 100B is a custom data destruction object for a custom business object, such as the bonus plan object 100A. The definition defines other objects linked to the data destruction object, which in this example is the customized bonus plan object 100A.

Referring to FIG. 1D, the data destruction object 100B may define and/or include logic that is used to determine the destructibility of for example the bonus plan object 100A data, such as the data for employee John Keller of FIG. 1C. The definition of the data destruction object 110B may include a name of data destruction object, such as BONUS_PLAN_DESTR 186A. The definition of the data destruction object 100B includes the data destruction logic, such as CL_BONUS_PLAN_DESTR 186B. The CL_BONUS_PLAN_DESTR 186B may define a file containing logic. Table 1 below depicts an example of this logic. Alternatively, or additionally, the definition of the data destruction object 110B includes a Structure Definition 186C, such as a structure including the parent table 186D from which data should be deleted, which in this example is the BONUS_PLAN table 187F (e.g., data of FIG. 1C associated with the bonus plan object 100A).

**Table 1**

| |
|---|
| • Initiates data destruction run - authorization checks performed, job information is updated in data destruction run persistence layer with the corresponding the data destruction object. |
| • Initialize message logging for success/failure in data destruction runs. |
| • Get the registered condition and time reference fields with their table and field mapping information for associated ILM object (see, e.g., FIG. 1E 196c, 196d, 196e). |
| • Select data records from the data base persistence of a custom business object (see, e.g., FIG. 1B is the custom object and FIG. 1C is the data record). |
| • Check data destructibility for the data record (see, e.g., FIG. 1C) by checking the data retention rule defined in 235A. |
| • Delete data record from database persistence based on data destructibility indicator (e.g., true so destroy or false do not destroy). |
| • Add messages to application logs regarding destruction. |
| • Close the data destruction run by updating data destruction run persistence. |

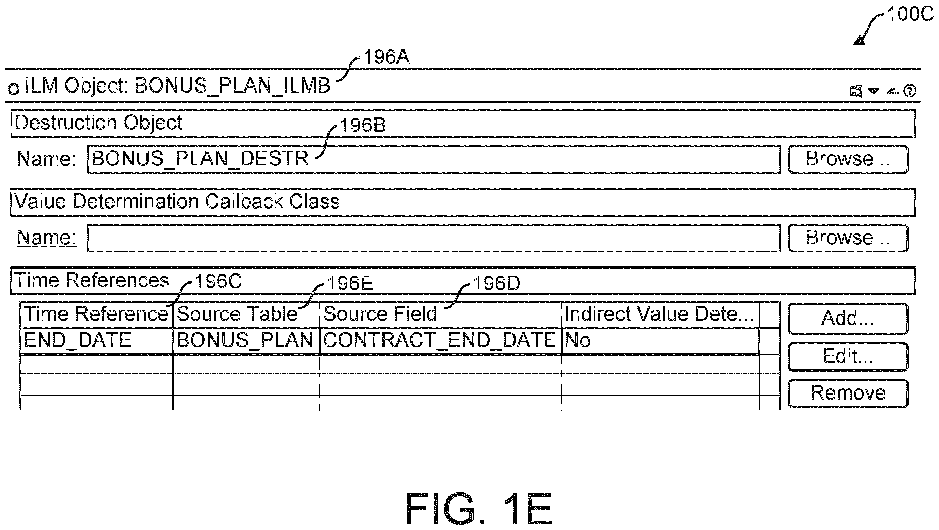

As noted, the ILM object may be created at 114. FIG. 1E depicts an example of a definition of an ILM object 100C, in accordance with some embodiments. For example, the ILM object 100C may be created newly. However, the destruction object such as BONUS_PLAN_DESTR object 100B is mapped to an ILM object BONUS_PLAN_ILMB. Moreover, information such as settings for time reference (e.g., CONTRACT_END_DATE) may be added to enable determination of a data retention date. Referring to FIG. 1E, the ILM object 100C may be defined, such that the definition of the ILM object includes a Name of the ILM Object, such as BONUS_PLAN_ILMB 196A. Alternatively, or additionally, the definition of the ILM object may define which data destruct object(s), such as Bonus_Plan_DESTR, at 196B, Alternatively, or additionally, the definition of the ILM object may include a time reference 196C for the calculation of for example a retention date, such as CONTRACT_END_DATE 196D and for example a source table 196E for that contract end data (which in this example is obtained from the bonus plan object 100A of FIG. 1B).

During the configuration phase 120, retention periods for the ILM Object BUSINESS_PLAN_ILMB may be configured. For example, a minimum retention period and/or maximum retention period may be configured (e.g., in terms of days, months, and/or years). To illustrate further, the ILM Object BUSINESS_PLAN _ILMB 196A may define a retention period of three years after a last payroll entry in a jurisdiction, such as India, so after the 3-year retention period, the employee record can (and should be) deleted.

During the runtime phase 130, a runtime application may provide a user interface with which a data destruction job may be scheduled to destroy the data destruction object for BONUS_PLAN DESTR. In this example, the data destruction run is triggered as a system background job and the data destruction business logic determines that the employee data in "Bonus Plan" data persistence and deletes eligible records as per retention rule configured during the configuration phase 120. Moreover, the data destruction logs may be monitored after data destruction run to assess the success or failure in the deletion of employee records from "Bonus Plan".

To summarize by way of an example, a manager may want to define a business object for a "Bonus Plan" for employees. The bonus plan object 100A of FIG. 1B may be created to define and store employee specific rules for the bonus program. And FIG. 1C depicts the data persisted in a database for bonus plan object 100A. As long as the employee, such as John Keller as noted at FIG. 1C, is still employed by the enterprise, the HRM application may use and rely on the stored data for that employee. But once that employee is terminated, a policy or rule, such as a retention period, may be used to determine when the employee's data should be destroyed as depicted at FIG. 1C (as well as other employee master data for that terminated employee). In other words, on or after the retention period expires, the employee's data as depicted at FIG. 1C (as well as other employee master data for that terminated employee) may be deleted from the data persistency layer.

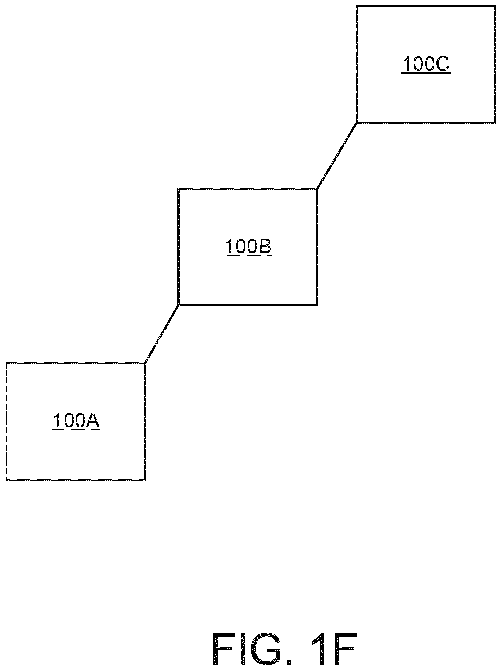

FIG. 1F depicts the relationship among objects 100A, 100B, and 100C, in accordance with some embodiments. For example, the ILM object 100C may be used to determine which of the data destruction objects 100B are eligible for destruction based on logic (e.g., expiration date calculated using retention period), the data destruction objects defining the data objects 100A having the data that should be destroyed.

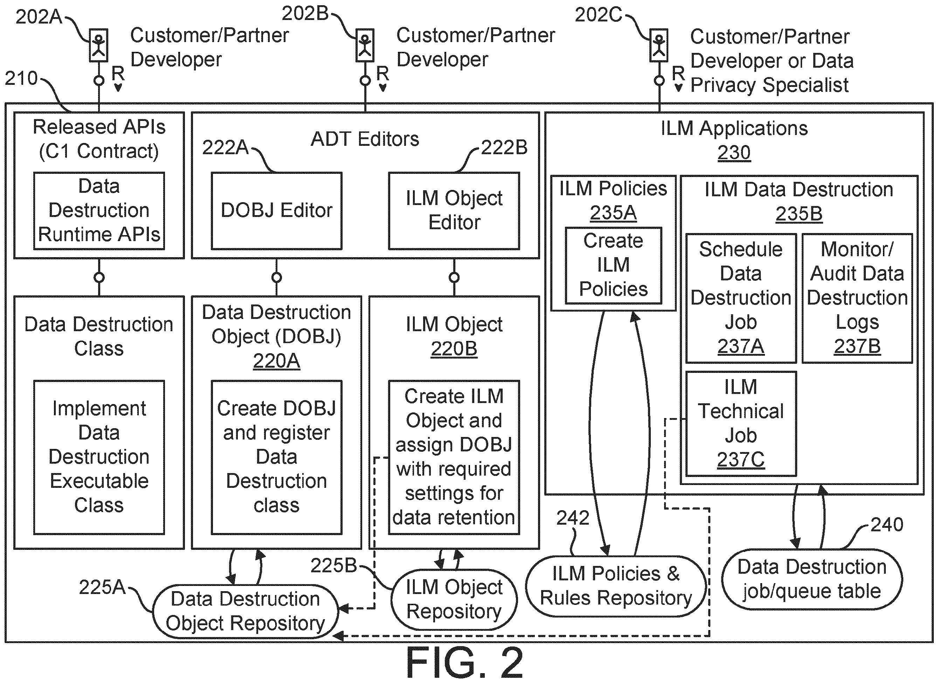

FIG. 2 depicts a system view of data destruction in accordance with some embodiments.

For example, an application, such as a user interface, editor, and/or other type of application, at a client device 202A may be used by an end-user to access one or more APIs 210 to destroy one or more data using data destruction object. In some embodiments, each data destruction object has a corresponding API that can be called at runtime to initiate data destruction. The API may be released, so that the API can be called at runtime to destroy a data destruction object. For example, the data destruction runtime API may be called to initiate a data destruction of a data destruction object. Alternatively, or additionally, the API may be configured to enable performance of a data retention check as per the configurations of the data destruction object and the ILM object. Alternatively, or additionally, the API may be configured to enable creation of a log and its handling. Alternatively, or additionally, the API may be configured to provide methods for log messages and handling of those message. Alternatively, or additionally, the API may be configured to enable creation of application logs for monitoring data destruction runs. Alternatively, or additionally, the API may be configured to enable persistence of data destruction metadata in the relevant database tables.

At FIG. 2, a client device 202B may be accessed by a user to configure the data destruction object 220A and ILM object 220B using an application, such as a user interface or editor. In the example of FIG. 2, the application comprises a data destruction object (DOBJ) editor 222A and an ILM object editor 222B. FIG. 2 also shows that the created data destruction objects may be stored in a data destruction object repository 225A, while the ILM objects may be stored in an ILM object repository 225B, such that they can be scheduled and queued via a table (e.g., a data destruction job/queue table 240) for destruction.

At FIG. 2, a client device 202C may be accessed by an end user to access an ILM application 230 to create polices for the ILM objects 235A. As shown in FIG. 1E, policies may be created (e.g., a retention policy) for an ILM object. Moreover, the ILM application 235B can be used to access ILM data destruction object. For example, the ILM data destruction 235B may schedule a data destruction job 237A, monitor/audit data destruction logs 237B, and/or access the data destruction object repository 225A to destroy (or cause the destruction of) a data related to destruction object. The ILM policies created at 235A may be stored in a repository, such as ILM policies and rules repository 242.

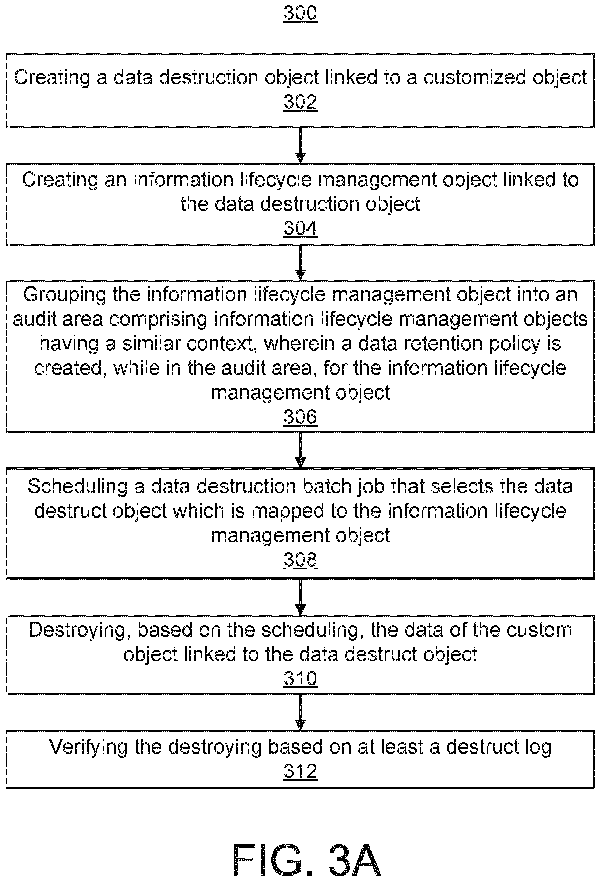

FIG. 3A depicts an example of a process for compliant data management for customized objects.

At 302, the process may include creating a data destruction object linked to a custom object. For example, an end user may define a data destruction object 100B. Referring to FIG. 1D, the data destruction object (e.g., Data Destruction Object BONUS_PLAN_DESTR is defined (e.g., via the user interface at FIG. 1D) such that the data destruction object is associated (e.g., linked) to a parent table (or object) at 186D, such as the custom object for the "BONUS_PLAN" object at FIG. 1B.

At 304, the process may include creating an information lifecycle management (ILM) object linked to the data destruction object. For example, an end user may define an ILM object, such as ILM object 100C depicted at FIG. 1E. Referring to FIG. 1E, the ILM object (e.g., ILM Object BONUS_PLAN_ILMB 196A) may be linked at 196B to a data destruction object, such as data destruction object 100B. In some embodiments, there is a 1-1 mapping between the information lifecycle management object and the data destruction object.

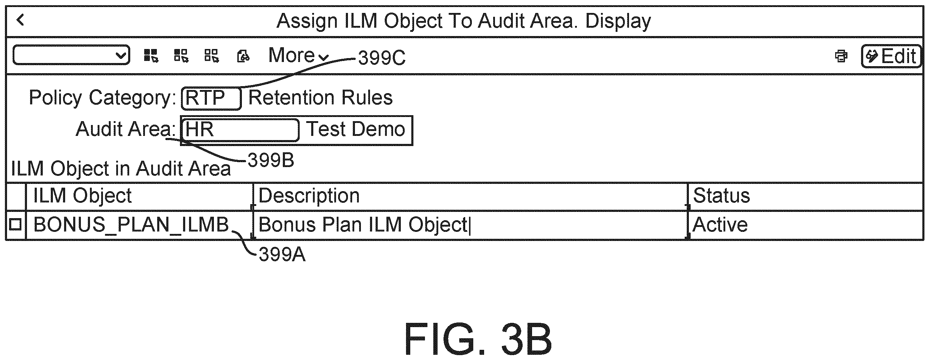

At 306, the process may include grouping the information lifecycle management object (which is linked to the data destruction object) into an audit area having ILM objects having a similar context. For example, the ILM object 100C may be placed into one of a plurality of audit areas. The selected audit areas may define groups of ILM objects having similar context, such as employee data, tax data, securities information, health data, and/or the like. While in an audit area, the retention policies (e.g., logic and/or parameters) may be created (e.g., further defined) for the information lifecycle management object which is linked to the data destruction object. Referring to FIG. 3B, depicts an example of an audit area user interface. Using this user interface, the ILM object 399A (e.g., BONUS_PLAN_ILMB) is grouped into an audit area 399B, such as human resources (HR) associated with other ILM objects having a similar context (such as HR). Moreover, the data retention policy may be created for the ILM object. For example, while in the audit area, the data retention policy may be created at 399C for the ILM object. AT 399C, the "RTP" links to data and/or logic defining a data retention policy for the HR context.

At 308, the process may include scheduling a data destruction batch job selecting a data destruction object for destruction which is mapped to the ILM object. For example, a data destruction batch job may be created and executed, the batch job may include an instruction to destroy the data destruction object, such as BONUS_PLAN_DESTR 196B which is linked to ILM object 196A. If the retention policies associated with the data destruction object allow for the destruction, the destruction is allowed during the destruction. After the batch job is scheduled for execution, the batch job creates an entry in the data destruction job queue that will be picked for execution when the destruct job is executed (e.g., overnight, at the end of the week, or at other times).

At 310, the process may include destroying, based on the scheduling, the data of the custom object linked to the data destruction object For example, the batch job may schedule the destruction of data destruction object including the data, such as the data of FIG. 1C of the custom data object of FIG. 1B. At 310, the retention policy linked to the destruction object is checked and if the retention policy (or the associated logic) indicates destruction allowed, the destruction proceeds. If the the retention policy linked to the destruction object is checked and if the retention policy (or the associated logic) indicates destruction is not allowed, the destruction does not proceed. At 312, the destruction may be verified by for example monitoring a log of destructions which indicates whether the destruction of data destruction object including the data was successful.

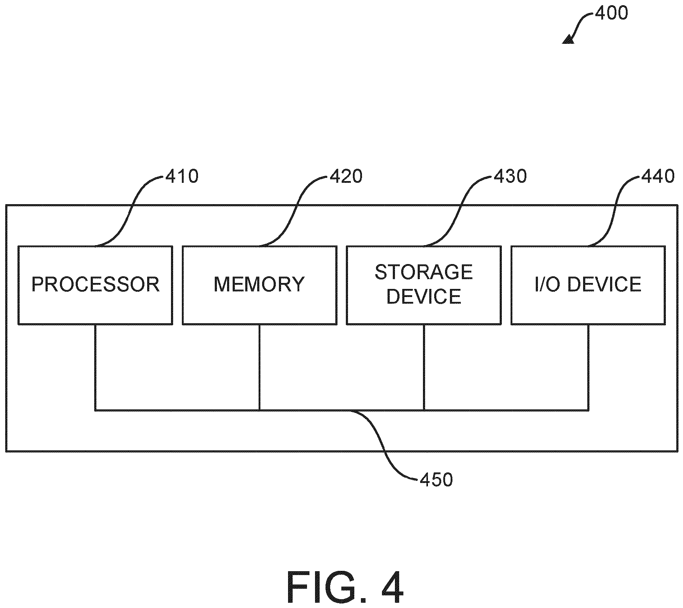

In some implementations, the current subject matter can be configured to be implemented in a system 400, as shown in FIG. 4. The system 400 can include a processor 410, a memory 420, a storage device 430, and an input/output device 440. Each of the components, such as 410, 420, 430 and 440, can be interconnected using a system bus 450. The processor 410 can be configured to process instructions for execution within the system 400. In some implementations, the processor 410 can be a single-threaded processor. In alternate implementations, the processor 410 can be a multi-threaded processor. The processor 410 can be further configured to process instructions stored in the memory 420 or on the storage device 430, including receiving or sending information through the input/output device 440. The memory 420 can store information within the system 400. In some implementations, the memory 420 can be a computer-readable medium. In alternate implementations, the memory 420 can be a volatile memory unit. In yet some implementations, the memory 420 can be a non-volatile memory unit. The storage device 430 can be capable of providing mass storage for the system 400. In some implementations, the storage device 430 can be a computer-readable medium. In alternate implementations, the storage device 430 can be a floppy disk device, a hard disk device, an optical disk device, a tape device, non-volatile solid-state memory, or any other type of storage device. The input/output device 440 can be configured to provide input/output operations for the system 400. In some implementations, the input/output device 440 can include a keyboard and/or pointing device. In alternate implementations, the input/output device 440 can include a display unit for displaying graphical user interfaces.

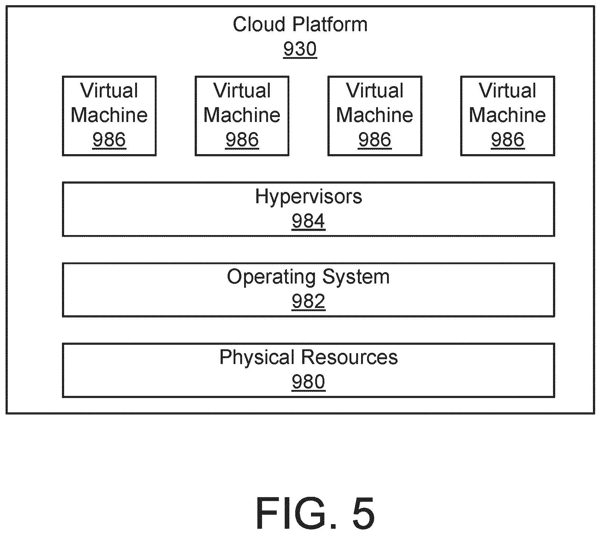

FIG. 5 depicts an example implementation of the cloud platform 930 (of FIG. 1). The cloud platform 930 may be implemented using various physical resources 980, such as at least one or more hardware servers, at least one storage, at least one memory, at least one network interface, and the like. The cloud platform 930 may also be implemented using infrastructure, as noted above, which may include at least one operating system 982 for the physical resources 980 and at least one hypervisor 984 (which may create and run at least one virtual machine 986). For example, each multitenant application may be run on a corresponding virtual machine 986.

The systems and methods disclosed herein can be embodied in various forms including, for example, a data processor, such as a computer that also includes a database, digital electronic circuitry, firmware, software, or in combinations of them. Moreover, the above-noted features and other aspects and principles of the present disclosed implementations can be implemented in various environments. Such environments and related applications can be specially constructed for performing the various processes and operations according to the disclosed implementations or they can include a general-purpose computer or computing platform selectively activated or reconfigured by code to provide the necessary functionality. The processes disclosed herein are not inherently related to any computer, network, architecture, environment, or other apparatus, and can be implemented by a suitable combination of hardware, software, and/or firmware. For example, various general-purpose machines can be used with programs written in accordance with teachings of the disclosed implementations, or it can be more convenient to construct a specialized apparatus or system to perform the required methods and techniques.

The systems and methods disclosed herein can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

As used herein, the term "user" can refer to any entity including a person or a computer.

Although ordinal numbers such as first, second, and the like can, in some situations, relate to an order; as used in this document ordinal numbers do not necessarily imply an order. For example, ordinal numbers can be merely used to distinguish one item from another. For example, to distinguish a first event from a second event, but need not imply any chronological ordering or a fixed reference system (such that a first event in one paragraph of the description can be different from a first event in another paragraph of the description).

The foregoing description is intended to illustrate but not to limit the scope of the invention, which is defined by the scope of the appended claims. Other implementations are within the scope of the following claims.

These computer programs, which can also be referred to programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random-access memory associated with one or more physical processor cores.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user can provide input to the computer. Other kinds of devices can be used to provide for interaction with a user as well. For example, feedback provided to the user can be any form of sensory feedback, such as for example visual feedback, auditory feedback, or tactile feedback; and input from the user can be received in any form, including, but not limited to, acoustic, speech, or tactile input.

The subject matter described herein can be implemented in a computing system that includes a back-end component, such as for example one or more data servers, or that includes a middleware component, such as for example one or more application servers, or that includes a front-end component, such as for example one or more client computers having a graphical user interface or a Web browser through which a user can interact with an implementation of the subject matter described herein, or any combination of such back-end, middleware, or front-end components. The components of the system can be interconnected by any form or medium of digital data communication, such as for example a communication network. Examples of communication networks include, but are not limited to, a local area network ("LAN"), a wide area network ("WAN"), and the Internet.

The computing system can include clients and servers. A client and server are generally, but not exclusively, remote from each other and typically interact through a communication network. The relationship of client and server arises by virtue of computer programs running on the respective computers and having a client-server relationship to each other.

Example 1: A computer-implemented method, comprising:
creating a data destruction object linked to a custom object;
creating an information lifecycle management object linked to the data destruction object;
grouping the information lifecycle management object into an audit area comprising information lifecycle management objects having a similar context, wherein a data retention policy is created, while in the audit area, for the information lifecycle management object;
scheduling a data destruction batch job selecting a data destruction object for destruction which is mapped to information lifecycle management object; and
destroying, based on the scheduling, one or more data of the customized object; and
verifying the destroy based on a check of a destruction log.

Example 2: The computer-implemented method of Example 1, wherein the data destruction object is linked to the custom object using a first user interface.

Example 3: The computer-implemented method of any of Examples 1-2, wherein an application using the custom object is deployed in a container to a destination cloud platform, wherein the container further includes the data destruction object and the information lifecycle management object.

Example 4: The computer-implemented method of any of Examples 1-3, wherein the information lifecycle management object is linked to the data destruction object using a second user interface.

Example 5: The computer-implemented method of any of Examples 1-4, wherein there is a 1-1 mapping between the information lifecycle management object and the data destruction object.

Example 6: The computer-implemented method of any of Examples 1-5, wherein the information lifecycle management object is grouped into the audit area using a third user interface.

Example 7: The computer-implemented method of any of Examples 1-6, wherein the similar context comprises a financial audit area, a tax audit area, or a human resource audit.

Example 8: The computer-implemented method of any of Examples 1-7, wherein the data retention policy is created, while in the audit area, for the information lifecycle management object using a fourth user interface.

Example 9: The computer-implemented method of any of Examples 1-8, wherein the data retention policy specifies at least a time when the destroying can occur.

Example 10: A system comprising:
at least one processor; and
at least one memory including instructions which when executed by the at least one processor causes operations comprising:
   creating a data destruction object linked to a custom object;
   creating an information lifecycle management object linked to the data destruction object;
   grouping the information lifecycle management object into an audit area comprising information lifecycle management objects having a similar context, wherein a data retention policy is created, while in the audit area, for the information lifecycle management object;
   scheduling a data destruction batch job selecting a data destruction object for destruction which is mapped to information lifecycle management object; and
   destroying, based on the scheduling, one or more data of the customized object; and
   verifying the destroy based on a check of a destruction log.

Example 11: The system of Example 10, wherein the data destruction object is linked to the custom object using a first user interface.

Example 12: The system of any of Examples 10-11, wherein an application using the custom object is deployed in a container to a destination cloud platform, wherein the container further includes the data destruction object and the information lifecycle management object.

Example 13: The system of any of Examples 10-12, wherein the information lifecycle management object is linked to the data destruction object using a second user interface.

Example 14: The system of any of Examples 10-13, wherein there is a 1-1 mapping between the information lifecycle management object and the data destruction object.

Example 15: The system any of Examples 10-14, wherein the information lifecycle management object is grouped into the audit area using a third user interface.

Example 16: The system of any of Examples 10-15, wherein the similar context comprises a financial audit area, a tax audit area, or a human resource audit.

Example 17: The system of any of Examples 10-16, wherein the data retention policy is created, while in the audit area, for the information lifecycle management object using a fourth user interface.

Example 18: The system of any of Examples 10-17, wherein the data retention policy specifies at least a time when the destroying can occur.

Example 19: At least one non-transitory computer-readable storage medium comprising:
at least one processor; and
at least one memory including instructions which when executed by the at least one processor causes operations comprising:
   creating a data destruction object linked to a custom object;
   creating an information lifecycle management object linked to the data destruction object;
   grouping the information lifecycle management object into an audit area comprising information lifecycle management objects having a similar context, wherein a data retention policy is created, while in the audit area, for the information lifecycle management object;
   scheduling a data destruction batch job selecting a data destruction object for destruction which is mapped to information lifecycle management object; and
   destroying, based on the scheduling, one or more data of the customized object; and
   verifying the destroy based on a check of a destruction log.

Example 20: The at least one non-transitory computer-readable storage medium of Example 19, wherein the data destruction object is linked to the custom object using a first user interface.

The implementations set forth in the foregoing description do not represent all implementations consistent with the subject matter described herein. Instead, they are merely some examples consistent with aspects related to the described subject matter. Although a few variations have been described in detail above, other modifications or additions are possible. Further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the order shown, or sequential order, to achieve desirable results. Other implementations can be within the scope of the following claims.

## Claims

1. A computer-implemented method, comprising:
creating a data destruction object linked to a custom object;
creating an information lifecycle management object linked to the data destruction object;
grouping the information lifecycle management object into an audit area comprising information lifecycle management objects having a similar context, wherein a data retention policy is created, while in the audit area, for the information lifecycle management object;
scheduling a data destruction batch job selecting a data destruction object for destruction which is mapped to information lifecycle management object; and
destroying, based on the scheduling, one or more data of the customized object; and
verifying the destroy based on a check of a destruction log.

2. The computer-implemented method of claim 1, wherein the data destruction object is linked to the custom object using a first user interface.

3. The computer-implemented method of claim 1 or 2, wherein an application using the custom object is deployed in a container to a destination cloud platform, wherein the container further includes the data destruction object and the information lifecycle management object.

4. The computer-implemented method of any one of the preceding claims, wherein the information lifecycle management object is linked to the data destruction object using a second user interface;
and/or
wherein there is a 1-1 mapping between the information lifecycle management object and the data destruction object.

5. The computer-implemented method of any one of the preceding claims, wherein the information lifecycle management object is grouped into the audit area using a third user interface;
and/or
wherein the similar context comprises a financial audit area, a tax audit area, or a human resource audit.

6. The computer-implemented method of any one of the preceding claims, wherein the data retention policy is created, while in the audit area, for the information lifecycle management object using a fourth user interface.

7. The computer-implemented method of any one of the preceding claims, wherein the data retention policy specifies at least a time when the destroying can occur.

8. A system comprising:
at least one processor; and
at least one memory including instructions which when executed by the at least one processor causes operations comprising:
creating a data destruction object linked to a custom object;
creating an information lifecycle management object linked to the data destruction object;
grouping the information lifecycle management object into an audit area comprising information lifecycle management objects having a similar context, wherein a data retention policy is created, while in the audit area, for the information lifecycle management object;
scheduling a data destruction batch job selecting a data destruction object for destruction which is mapped to information lifecycle management object; and
destroying, based on the scheduling, one or more data of the customized object; and
verifying the destroy based on a check of a destruction log.

9. The system of claim 8, wherein the data destruction object is linked to the custom object using a first user interface.

10. The system of claim 8 or 9, wherein an application using the custom object is deployed in a container to a destination cloud platform, wherein the container further includes the data destruction object and the information lifecycle management object.

11. The system of any one of claims 8 to 10, wherein the information lifecycle management object is linked to the data destruction object using a second user interface;
and/or
wherein there is a 1-1 mapping between the information lifecycle management object and the data destruction object.

12. The system of any one of claims 8 to 11, wherein the information lifecycle management object is grouped into the audit area using a third user interface;
and/or
wherein the similar context comprises a financial audit area, a tax audit area, or a human resource audit.

13. The system of any one of claims 8 to 12, wherein the data retention policy is created, while in the audit area, for the information lifecycle management object using a fourth user interface.

14. The system of any one of claims 8 to 13, wherein the data retention policy specifies at least a time when the destroying can occur.

15. At least one non-transitory computer-readable storage medium comprising:
at least one processor; and
at least one memory including instructions which when executed by the at least one processor causes operations according to the method of any one of claims 1 to 7.
